# EUROPEAN PATENT APPLICATION

(11) **EP 4 394 606 A1**
(43) Date of publication of application: **03.07.2024**
(21) Application number: 22868683.8
(22) Date of filing: 12.05.2022
(51) Int. Cl.: G06F 11/14

(54) **DATA BACKUP SYSTEM AND APPARATUS**

(30) Priority: 18.09.2021 CN 202111101810
(71) Applicant: Huawei Technologies Co., Ltd., Shenzhen, Guangdong 518129 (CN)
(72) Inventor: DU, Xiang, Shenzhen, Guangdong 518129 (CN); LUO, Xianqiang, Shenzhen, Guangdong 518129 (CN); CHEN, Keyun, Shenzhen, Guangdong 518129 (CN)
(74) Representative: Maiwald GmbH
(86) International application number: PCT/CN2022/092467
(87) International publication number: WO 2023/040305

(57) **Abstract**

This application provides a data backup system and an apparatus. The system includes a data processing apparatus and a storage device. The data processing apparatus is configured to receive a write request sent by a first host, where the write request carries first data that needs to be backed up to the storage device. The data processing apparatus is configured to perform deduplication and compression operations on the first data, to obtain second data. The data processing apparatus is further configured to write the second data into the storage device. In the foregoing manner, calculation operations such as writing the to-be-backed-up data into a memory and deduplicating the to-be-backed-up data are performed in the data processing apparatus, and do not consume CPU resources of the first host. Therefore, impact on a production environment of the first host is reduced, and CPU utilization of the first host is improved.

## Description

### CROSS-REFERENCE TO RELATED APPLICATIONS

This application claims priority to Chinese Patent Application No. 202111101810.2, filed with the China National Intellectual Property Administration on September 18, 2021 and entitled "DATA BACKUP SYSTEM AND APPARATUS", which is incorporated herein by reference in its entirety.

### TECHNICAL FIELD

This application relates to the field of computer technologies, and in particular, to a data backup system and an apparatus.

### BACKGROUND

In the field of information and data management, backup usually refers to a process of copying all or a part of data sets in a file system or a database system from a disk or a storage array of a service host to another storage medium.

In a backup manner, data may be backed up to a remote storage device by using backup software deployed on the service host. The data that needs to be backed up usually has a high data repetition rate. For this feature, backup software providers usually integrate a source-end (namely, service host end) deduplication technology to delete duplicate data that has been stored from the to-be-backed-up data, to reduce an amount of data transmitted between the service host and the storage device and improve logical backup bandwidth.

However, the foregoing deduplication operation consumes a large quantity of CPU computing resources on the service host, and may greatly affect service performance of the service host.

### SUMMARY

This application provides a data backup system and an apparatus, to reduce impact on performance of a service host while ensuring backup bandwidth.

According to a first aspect, an embodiment of this application provides a data backup system. The system includes a data processing apparatus and a storage device. In the system, the data processing apparatus may be configured to receive a write request sent by a service host (for example, referred to as a first host), where the write request requests to write to-be-backed-up data (for example, referred to as first data) into the storage device. After receiving the write request, the storage device may perform deduplication and compression operations on the first data carried in the write request, to obtain data (for example, referred to as second data) obtained through the deduplication and compression operations, and send the second data to the storage device. The storage device is configured to receive the second data sent by the data processing apparatus, and store the second data. In this way, backup of the first data is completed.

According to the foregoing design, calculation operations such as writing the to-be-backed-up data (for example, the first data) into a memory and deduplicating and compressing the to-be-backed-up data are performed in the data processing apparatus, and do not consume CPU resources of the first host. Therefore, impact on a production environment of the first host is reduced, and CPU utilization of the first host is improved.

In a possible implementation, the data processing apparatus may be a network interface card or a data processing unit (DPU).

According to the foregoing design, when the data processing apparatus is a network interface card or a DPU, the data processing apparatus may be integrated into or installed in the service host in a pluggable manner, and deployment is more convenient.

In a possible implementation, after receiving the write request, the data processing apparatus stores, in a memory of the data processing apparatus, the first data carried in the write request, and then returns a write request completion response to the first host. When performing the deduplication operation on the first data, the data processing apparatus is specifically configured to: obtain the first data from the memory, and delete, from the first data, a data block duplicated with a data block that has been stored in the storage device.

According to the foregoing design, the data processing apparatus performs calculation operations such as deduplication and compression on the to-be-backed-up data, to reduce consumption of CPU resources of the first host, and improve backup efficiency of a backup task on the first host.

In a possible implementation, after receiving the write request, the data processing apparatus is further configured to: after storing the first data in a memory of the data processing apparatus, return a write request completion response to the first host; obtain the first data from the memory, and store the first data in a persistent storage medium of the data processing apparatus. When performing the deduplication and compression operations on the first data, the data processing apparatus is specifically configured to: obtain the first data from the persistent storage medium; and delete, from the first data, a data block duplicated with a data block that has been stored in the storage device.

According to the foregoing design, the data processing apparatus may first temporarily write the to-be-backed-up file data into the local persistent storage medium, for example, a disk. Because the file data has been persistently stored, logical data backup is completed. In this way, the data backup can be completed in the data processing apparatus. A backup process depends only on a computing capability of the data processing apparatus and read/write bandwidth and a size of the disk, and is no longer limited by performance of bandwidth from the host to the storage device and a processing capability of the storage device. In a big data backup scenario, backup performance can be significantly improved, and a backup window can be shortened. In addition, during the logical backup, operations such as deduplication and compression does not need to be performed on the to-be-backed-up data, and the to-be-backed-up data does not need to be sent to the storage device for storage. Therefore, network communication overheads are not needed, and the backup window can be significantly shortened, to improve backup efficiency.

In a possible implementation, the data processing apparatus further includes a first file system, and the first file system is the same as a second file system of the storage device. The write request sent by the first host is a write request based on the second file system, for example, used to write the first data into a first file of the second file system. When storing the first data in the persistent storage medium of the data processing apparatus, the data processing apparatus is specifically configured to store the first data in the persistent storage medium of the data processing apparatus by using the first file system.

According to the foregoing design, the data processing apparatus stores and manages, by using the local file system, the to-be-backed-up file data sent by the host.

In a possible implementation, the data processing apparatus is further configured to: receive a file creation request, where the file creation request requests to create the first file in the second file system; and send the file creation request to the storage apparatus.

The storage device is further configured to: create, in the second file system of the storage device, the first file that the file creation request requests to create; generate mapping address information of the first file, where the mapping address information indicates that data of the first file is located in the data processing apparatus, or indicates an access path of the data of the first file in the data processing apparatus; and send a creation success response to the data processing apparatus.

The data processing apparatus is further configured to: receive the creation success response sent by the storage device, and create the first file in the first file system. The write request sent by the first host requests to write the first data into the first file of the second file system. When storing the first data in the persistent storage medium of the data processing apparatus, the data processing apparatus is specifically configured to write the first data into the first file of the first file system.

According to the foregoing design, the storage device obtains the data of the file based on the mapping address information of the file, to serve as a data access entry for more device data access, and provide data access flexibility.

In a possible implementation, the data processing apparatus is further configured to: after performing the deduplication and compression operations on the data of the first file and storing the data in the storage apparatus, delete the first file stored in the data processing apparatus. The storage apparatus is configured to modify the mapping address information of the first file to indicate that the data of the first file is stored in the storage apparatus.

According to the foregoing design, the data processing apparatus deletes the data after storing the data in the storage device, so that utilization of the storage medium can be improved.

In a possible implementation, the data processing apparatus is further configured to: receive a first read request sent by a second host, where the first read request is used to read at least a part of the data of the first file; and forward the read request to the storage device. The storage device is configured to: when determining, based on the mapping address information of the first file, that the data of the first file is located in the data processing apparatus, send a second read request to the data processing apparatus, where the second read request requests to read the at least a part of the data of the first file. The data processing apparatus is further configured to read the at least a part of data of the first file from the data processing apparatus based on the read request.

According to the foregoing design, the data processing apparatus provides a backup service for the host, that is, stores the to-be-backed-up data of the host in the local persistent storage medium of the data processing apparatus, and the data processing apparatus may further provide a data access service for another device, to provide the data access flexibility.

According to a second aspect, an embodiment of this application further provides a data processing apparatus. The data processing apparatus has a function of implementing behavior in the method example in the first aspect. For beneficial effects, refer to the descriptions of the first aspect. Details are not described herein again. The function may be implemented by hardware, or may be implemented by hardware executing corresponding software. The hardware or the software includes one or more modules corresponding to the foregoing function. In a possible design, a structure of the data processing apparatus includes a receiving module, a processing module, and a sending module. These modules may perform corresponding functions in the method example in the first aspect. For details, refer to the detailed descriptions in the method example. Details are not described herein again.

According to a third aspect, this application further provides a computing apparatus. The computing apparatus includes a processor and a storage, and may further include a communication interface. The processor executes program instructions in the storage to perform the method according to any one of the first aspect or the possible implementations of the first aspect. The storage is coupled to the processor, and stores program instructions and data that are necessary in a data backup process. The communication interface is configured to communicate with another device, for example, receive a write request sent by a first host, or send second data to a storage device.

According to a fourth aspect, this application provides a computer-readable storage medium. When the computer-readable storage medium is executed by a computing device, the computing device performs the method according to any one of the first aspect or the possible implementations of the first aspect. The storage medium stores a program. The storage medium includes but is not limited to a volatile memory, for example, a random access memory, or a non-volatile memory, for example, a flash memory, a hard disk drive (hard disk drive, HDD), or a solid state drive (solid state drive, SSD).

According to a fifth aspect, this application provides a computing device program product. The computing device program product includes computer instructions. When the computer instructions are executed by a computing device, the computing device performs the method according to any one of the first aspect or the possible implementations of the first aspect. The computer program product may be a software installation package. When the method according to any one of the first aspect or the possible implementations of the first aspect needs to be used, the computer program product may be downloaded and executed on the computing device.

According to a sixth aspect, this application further provides a computer chip. The chip is connected to a storage. The chip is configured to read and execute a software program stored in the storage, to perform the method according to any one of the first aspect and the possible implementations of the first aspect.

### BRIEF DESCRIPTION OF DRAWINGS

FIG. 1 is a schematic diagram of a system architecture according to an embodiment of this application;
FIG. 2 is a schematic flowchart of a data backup manner according to an embodiment of this application;
FIG. 3 is a schematic diagram of another system architecture according to an embodiment of this application;
FIG. 4 is a schematic flowchart of another data backup manner according to an embodiment of this application;
FIG. 5 is a schematic flowchart of file creation according to an embodiment of this application;
FIG. 6 is a schematic flowchart of file data migration according to an embodiment of this application;
FIG. 7 is a schematic flowchart of a data access method according to an embodiment of this application; and
FIG. 8 is a schematic diagram of a structure of a data processing apparatus according to an embodiment of this application.

### DESCRIPTION OF EMBODIMENTS

For ease of understanding of a data backup method provided in embodiments of this application, concepts and terms in embodiments of this application are first briefly described.
1. A file system is a structured data file storage and organization form. In a computer, all data is valued 0 or 1, and a series of combinations of 0 and 1 stored on a hardware medium are completely indistinguishable and unmanageable for a user. Therefore, in this application, a concept of "file" is used to organize the data. Data used for a same purpose is formed into different types of files based on structures required by different applications. Usually, different suffixes indicate different types, and each file is named for ease of understanding and memorizing. When there are a large quantity of files, the files can be grouped in a specific manner, and each group of files is placed in a same directory (namely, a folder). In addition to the files, a directory may include a lower-level directory (that is, a subdirectory or a subfolder). All the files and directories form a tree structure. The tree structure has a special name: file system (File System). There are many types of file systems, such as FAT, FAT32, and NTFS in Windows, and EXT2, EXT3, EXT4, XFS, and BtrFS in Linux. To facilitate search, level-by-level descending from a root node to the files, names of a directory, a subdirectory, and a file are combined with special characters (for example, "\" is used in Windows or DOS and "/" is used in a Unix-like system), and such a string of characters is called a file path, for example, "/etc/systemd/system.conf" in Linux or "C:\Windows\System32\taskmgr.exe" in Windows. A path is a unique identifier for accessing a specific file. For example, D:\data\file.exe in Windows is a path of a file, which indicates the file.exe file in a data directory in partition D.
2. Various numbers such as "first" and "second" in this application are merely used for differentiation for ease of description, and are not used to limit the scope of embodiments of this application or represent a sequence. The term "and/or" describes an association relationship between associated objects, and represents that three relationships may exist. For example, A and/or B may represent the following three cases: Only A exists, both A and B exist, and only B exists. The character "/" generally indicates an "or" relationship between the associated objects.

The following describes technical solutions in embodiments of the present invention with reference to accompanying drawings.

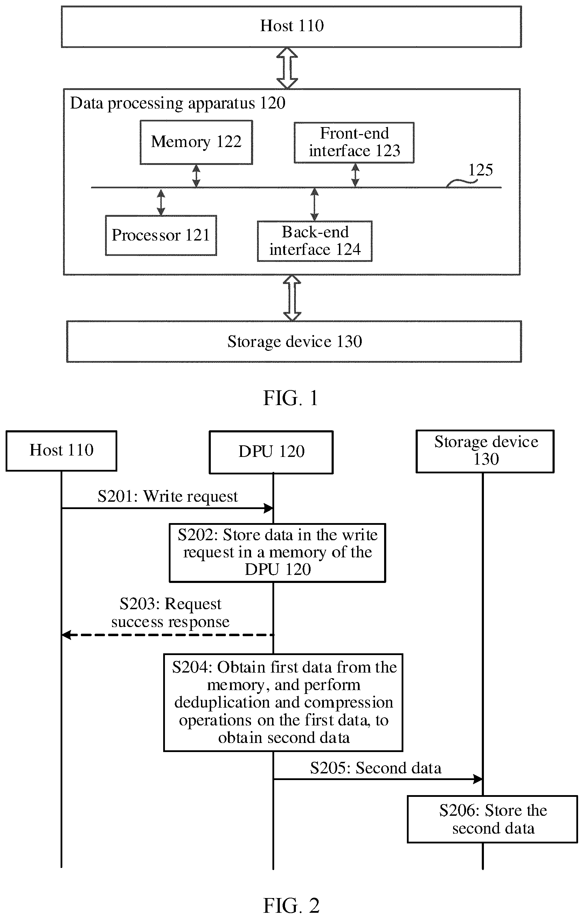

FIG. 1 is a schematic diagram of an architecture of a backup system according to an embodiment of the present invention. As shown in FIG. 1, the system includes a host 110 (FIG. 1 shows only one host 110, but this is not limited in this embodiment of this application), a data processing apparatus 120, and a storage device 130 (FIG. 1 shows only one storage device 130, but this is not limited in this embodiment of this application).
(1) The host 110 may be a computing device deployed on a user side, and the computing device may be a physical machine or a virtual machine. The physical machine includes but is not limited to a desktop computer, a server (such as an application server, a file server, or a database server), a laptop computer, and a mobile device.
   The host 110 is a service host that needs to back up data, and backup software is generally installed on the host 110. The host 110 backs up the data in the host 110 by running the backup software. A backup policy is further set in the backup software. The backup policy may be a backed-up policy, or may be a policy set by a user. The backup policy may be, for example, backup start time, data that needs to be backed up, or a target storage device for backing up the data. Specifically, the host 110 runs the backup software, and sends, to the data processing apparatus according to the backup policy set in the backup software, the data that needs to be backed up in the host. This is described in detail below.
(2) The data processing apparatus 120 is connected between the host 110 and the storage device 130, and is configured to process the data sent by the host 110, for example, perform deduplication and compression processing, and send the processed data to the storage device 130. A specific data processing process of the data processing apparatus 120 is described in detail below. The data processing apparatus 120 may be a data processing unit (DPU), a smart network interface card (smartnic), or another component. This is not limited in this embodiment of this application.

In terms of hardware, the data processing apparatus 120 includes a processor 121, a memory 122, a front-end interface 123, and a back-end interface 124. The processor 121, the memory 122, the front-end interface 123, and the back-end interface 124 are connected through a bus 125.

The processor 121 is implemented by a central processing unit (central processing unit, CPU), a hardware logic circuit, a processing core, an application-specific integrated circuit (application-specific integrated circuit, ASIC) chip, an AI chip, or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), a system on chip (system on chip, SoC), or any combination thereof.

The processor 121 may be configured to process a data backup request or a data recovery request from the host 110. For example, when receiving, through the front-end interface 123, the data backup request sent by the host 110, the processor 121 temporarily stores, in the memory 122, to-be-backed-up data carried in the data backup request. When a preset condition is met or a total amount of data in the memory 122 reaches a specific threshold, the processor 121 performs persistent storage of the data in the memory 122. In this embodiment of this application, two data persistence manners are provided. In one manner, the data is sent to the storage device 130 for persistent storage. When persistence is performed in this manner, the processor 121 performs the deduplication and compression processing on the data to be persistently stored, and then sends the data to the storage device 130 for storage. A specific deduplication and compression process is described in detail below. In the other manner, the data is first persisted to a local hard disk, then the deduplication and compression processing is performed on the data persisted to the hard disk, and the data after the deduplication and compression processing is sent to the storage device 130 for storage. For a specific process, refer to the following detailed descriptions. FIG. 1 shows only one processor 121. In actual application, there are usually a plurality of processors 121, and one processor 121 has one or more processor cores. A quantity of processors and a quantity of processor cores are not limited in this embodiment.

The memory 122 refers to an internal storage that directly exchanges data with the processor 121. The memory 122 can read and write data at a high speed at any time, and serves as a temporary data storage of an operating system or another running program. The memory 122 includes at least two types of storages. For example, the memory 122 may be a random access memory or a read-only memory (read-only memory, ROM). For example, the random access memory is a dynamic random access memory (dynamic random access memory, DRAM) or a storage class memory (storage class memory, SCM). The DRAM is a semiconductor storage, and is a volatile memory (volatile memory) device like most RAMs. The SCM uses a composite storage technology that combines both a conventional storage apparatus feature and a storage feature. The storage class memory can provide a higher read/write speed than the hard disk, but is slower than the DRAM in terms of an access speed and cheaper than the DRAM in terms of costs. However, the DRAM and the SCM are merely examples for description in this embodiment of this application. The memory 122 may further include another random access memory, for example, a static random access memory (static random access memory, SRAM). For example, the read-only memory may be a programmable read-only memory (programmable read-only memory, PROM) or an erasable programmable read-only memory (erasable programmable read-only memory, EPROM). In addition, the memory 122 may alternatively be a dual in-line memory module (DIMM), that is, a module including the DRAM. In actual application, a plurality of memories 122 and different types of memories 122 may be configured in the data processing apparatus 120. A quantity and types of the memories 122 are not limited in this embodiment.

The front-end interface 123 is configured to transmit data between the data processing apparatus 120 and the host 110. For example, the front-end interface 123 may be a peripheral component interconnect express (Peripheral Component Interconnect Express, PCIe) interface, and the data processing apparatus 120 is connected to the host 110 through a PCIe bus. The front-end interface 123 may alternatively be another type of interface, for example, a non-volatile memory express (non-volatile memory express, NVMe) interface. This is not limited in this application. Any manner of implementing communication between the data processing apparatus 120 and the host 110 is applicable to this embodiment of this application.

The back-end interface 124 is configured to transmit data between the data processing apparatus 120 and the storage device 130. The back-end interface may be a network interface card, and the network interface card is connected to a network, so that the data processing apparatus 120 communicates with the storage device 130 by using the network. The network may be in a wired or wireless communication manner. For example, the network usually represents any telecommunication or computer network, including, for example, an enterprise intranet, a wide area network (wide area network, WAN), a local area network (local area network, LAN), a personal area network (personal area network, PAN), the Internet, or a wireless network (for example, Wi-Fi or a 5th generation (5th Generation, 5G) communication technology). Specifically, the data processing apparatus 120 may communicate with the storage device 130 by using a plurality of network protocols, for example, the TCP/IP protocol, the UDP/IP protocol, and the RDMA protocol. The data processing apparatus 120 may alternatively communicate with the storage device 130 by using a fiber channel switch in addition to the network in the foregoing example. Alternatively, the fiber channel switch may be replaced with an Ethernet switch, an infiniband (InfiniBand) switch, a remote direct memory access over converged Ethernet (RDMA over converged Ethernet, RoCE) switch, or the like.

The bus 125 includes but is not limited to: a PCIe bus, a double data rate (double data rate, DDR) bus, an interconnection bus supporting a plurality of protocols (referred to as a multi-protocol interconnection bus, which is described in detail below), a serial advanced technology attachment (serial advanced technology attachment, SATA) bus, a serial attached SCSI (serial attached SCSI, SAS) bus, a controller area network (Controller Area Network, CAN) bus, a compute express link (compute express link, CXL) bus, and the like.

(3) The storage device 130 is configured to provide a data backup service for the host 110. The storage device 130 may be, but is not limited to, a storage area network (Storage Area Network, SAN) device or a network attached storage (network attached storage, NAS) device. For example, when the storage device 130 is a NAS device, the NAS device may be configured to provide a file-level sharing service for the host. In addition, FIG. 1 shows only one storage device 130. In actual application, the storage device 130 in this embodiment of this application may be a storage device 130 in a centralized storage system, or may be any storage device 130 in a distributed storage system.

The following uses the system shown in FIG. 1 as an example to describe the data backup method provided in embodiments of this application. For ease of description, an example in which the data processing apparatus 120 is a DPU is used for description in the following embodiment of this application.

FIG. 2 is a schematic flowchart of a data backup method according to an embodiment of this application. As shown in FIG. 2, the method includes the following steps.

Step 201: A host 110 sends a write request to a DPU 120 in response to a backup instruction, where the write request is used to back up data indicated by the backup instruction to a storage device 130. The write request carries the data that needs to be backed up to the storage device 130. The backup instruction may be generated in response to a backup operation of a user, or may be automatically generated by the host 110 according to a preset backup policy. The backup policy may be, for example, backup time and the data that needs to be backed up, for example, backing up a specified file system, a specified file, or a specified database every hour.

The following uses file backup as an example. When the host 110 performs backup, backup software opens a file that needs to be backed up in a file system by calling an open function, and then triggers a fwrite system call to transmit data of the file. For example, the fwrite system call carries information such as the data of the specified file (or a storage address of the data) and a path name of the file, to request to write the data of the specified file into a corresponding file in a file system of the storage device 130 by using the fwrite system call, so that data backup of the file is completed.

It should be noted that, in an implementation, the write request may be the fwrite system call. For example, when the DPU 120 accesses the host 110 by using a PCIe interface and a virtio-fs paravirtualization technology, direct communication may be implemented between two operating systems of the DPU 120 and the host 110. In this case, the DPU 120 may identify and receive the fwrite system call sent by the host 110. In another implementation, the write request may alternatively be a message that is in another protocol frame format and that is generated based on the fwrite system call. For example, when the DPU 120 accesses the host 110 through an NVMe interface or in another manner, the write request may be an RPC call generated based on the fwrite system call. In addition, fwrite herein is used to write file data, and generating the write request based on the fwrite is merely an example. A type and a generation manner of the write request are not limited in this embodiment of this application. For example, the write request may alternatively be generated based on a write system call.

Step 202: The DPU 120 stores the data in the write request in a memory 122.

Step 203: The DPU 120 sends a request success response to the host 110, to indicate that the DPU 120 has received the write request. It should be noted that step 203 is an optional step, and is not a mandatory step. Therefore, step 203 is shown by a dashed-line box in FIG. 2.

Step 204: The DPU 120 obtains, from the memory 122, to-be-backed-up data (for example, referred to as first data), performs deduplication and compression operations on the first data, and records data obtained through deduplication and compression as second data.

After receiving the write request sent by the host 110, the DPU 120 may temporarily store the data in the write request in the memory 122, and then the DPU 120 obtains the first data from the memory 122. The first data herein may be continuous data of a preset length, or may be data of a variable length. This is not limited in this embodiment of this application.

After obtaining the first data, the DPU 120 performs the deduplication and compression operations on the first data, where the deduplication and compression operations refer to data deduplication and/or data compression. The data deduplication refers to deleting duplicate data by using an algorithm, to reduce storage space occupied by data. In this application, if duplicate data is detected during backup, the duplicate data is discarded, and then a pointer is created to point to a data copy that has been backed up. In this way, an amount of data transmitted between the DPU 120 and the storage device 130 can be reduced, and network load is reduced. Specifically, based on a deduplication granularity, a deduplication method includes at least file-level deduplication and subfile-level deduplication (also referred to as block-level deduplication). The file-level deduplication is performed on a file basis. Descriptions are separately provided below.
(1) The file-level deduplication, also referred to as single-instance storage (single-instance storage, SIS), is to detect and delete a duplicate file copy. Only one copy of a file is stored, and another copy is replaced by a pointer that points to the unique copy. The file-level deduplication is simple and fast, but duplicate content in the file cannot be deleted. For example, two Powerpoint presentation files of 10 MB that are different only in title pages are not considered as duplicate files. The two files are stored separately.
(2) The subfile-level deduplication is to divide a file/an object into data blocks of a fixed size or different sizes, and perform a deduplication operation on a data block basis. In the subfile-level deduplication, duplicate data between files is deleted. The subfile-level deduplication can be implemented in two manners: fixed-length block deduplication and variable-length segment deduplication. In fixed-length block deduplication, a file is divided into fixed-length blocks, and duplicate data is found by using a hash algorithm. The fixed-length block deduplication is simple, but a large amount of duplicate data may be missed because similar data may have different block boundaries. Assuming that a person name is added to a title page of a document, the entire document is misaligned, all blocks change, and consequently, duplicate data cannot be detected. In variable-length segment deduplication, if a segment changes, only a boundary of the segment is adjusted, and a remaining segment remains unchanged. Compared with the fixed-length block deduplication, this method improves a capability of identifying duplicate data segments.

The following describes a data deduplication process by using variable-size block-level deduplication as an example. First, boundaries of blocks in the first data are determined based on a preset algorithm (for example, a content-defined chunking (Content-Defined Chunking, CDC) algorithm, which is not limited in this embodiment of this application), so that the first data is divided into a plurality of blocks, and sizes of the blocks may be different. Then, a hash operation (for example, SHA-1) is performed on a block basis, an obtained hash value is similar to fingerprint information of the data block, and data blocks with same content have same fingerprint information. In this way, whether content of the data blocks is the same can be determined through fingerprint matching. Then, fingerprint matching is performed between the data block and a data block that already exists in the storage device 130. A previously stored data block is not repeatedly stored, the data block is recorded only by using a hash value as index information, and the index information of the data block is mapped to a specific storage location. For a new data block that has not been stored before, the data block is physically stored first, and then the data block is recorded by using a hash value index. According to the foregoing process, it can be ensured that the same data block is stored on a physical medium only once, to delete duplicate data.

For example, the data deduplication process in this application may include the following.

The DPU 120 divides the first data into a plurality of data blocks based on the CDC algorithm. For example, the plurality of data blocks are a block 1, a block 2, a block 3, and a block 4. Then, a fingerprint (that is, a hash value) of each data block is calculated, and the fingerprint of each data block is sent to the storage device 130. The storage device 130 traverses a local fingerprint library, where the fingerprint library includes fingerprints of data blocks that have been stored in the storage device 130. The storage device 130 queries whether a fingerprint (fp1) of the block 1 of the first data, a fingerprint (fp2) of the block 2 of the first data, a fingerprint (fp3) of the block 3 of the first data, or a fingerprint (fp4) of the block 4 of the first data exists in the fingerprint library. If the fingerprint exists, the data block is a duplicate data block. For example, if the fingerprint library includes fp1 and fp3, but does not include fp2 and fp4, the block 1 and the block 3 are duplicate data blocks, and the block 2 and the block 4 are non-duplicate data blocks. Then, the storage device 130 sends a query result to the DPU 120. The query result herein indicates whether there is a duplicate data block in the first data, identification information of the duplicate data block, and the like.

Correspondingly, the DPU 120 determines the duplicate data block in the first data based on the query result, and the DPU 120 generates metadata of the duplicate data block. For example, the metadata includes but is not limited to a fingerprint of the data block, an offset of the data block in the first data, and a length of the data block. The metadata is not limited in this embodiment of this application. If only data deduplication is performed on the first data, and other data processing is not performed, the DPU 120 may send the metadata of the duplicate data block and data of the non-duplicate data block to the storage device 130. As shown in the foregoing example, data obtained through deduplication includes fp 1, fp3, data of the data block 2, and data of the data block 4. After the data deduplication, a data transmission amount is reduced, resource overheads for backup and network load are reduced, and logical backup bandwidth is improved.

In this application, the first data may be further compressed by using a compression algorithm. The compression algorithm may be, for example, a Shannon-Fano algorithm, Huffman encoding, arithmetic encoding, or LZ77/LZ78 encoding. This is not limited in this application. Any existing algorithm that can compress data and a compression algorithm that may be applied in the future are applicable to this embodiment of this application. In addition, the compression algorithm may be specified by a user, or compression may be adaptively performed by a system according to a preset policy. This is not limited in this embodiment of this application either.

The foregoing data processing manners may be used separately or in combination. For example, the DPU 120 may perform only data deduplication on the first data. Alternatively, the DPU 120 may perform only data compression on the first data. For another example, the DPU 120 may first perform data deduplication on the data, and then compress data obtained through deduplication. This is not limited in this embodiment of this application.

Step 205: The DPU 120 sends the second data to the storage device 130.

Step 206: The storage device 130 stores the second data.

In a process of storing the second data, the storage device 130 writes data of a non-duplicate data block into a storage medium, and generates metadata of the data. The metadata may include a storage location, a fingerprint, and the like of the data in the storage device 130. For a duplicate data block, only metadata of the duplicate data block needs to be recorded, and the metadata needs to point to a currently stored data block. In this way, backup of the first data is completed.

It should be noted that, the DPU 120 may send the second data to the storage device 130, or may aggregate a plurality of pieces of second data into one data block of a specified size and then send the data block to the storage device 130. To be specific, the DPU 120 repeatedly performs the foregoing steps to obtain the plurality of pieces of second data corresponding to the first data, aggregates the plurality of pieces of second data, and then sends the aggregated data to the storage device 130, to reduce a quantity of write I/Os.

In the foregoing manner, calculation operations such as writing the to-be-backed-up data into the memory 122 and deduplicating the to-be-backed-up data are performed in the DPU 120, and do not consume CPU resources of the host 110. Therefore, impact on a production environment of the host 110 is reduced, and CPU utilization of the host 110 is improved.

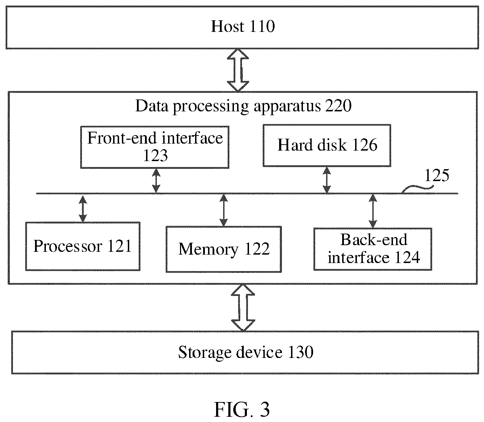

An embodiment of this application further provides another data processing apparatus 220. FIG. 3 is a schematic diagram of an architecture of the data processing apparatus 220. A hard disk 126 is added to FIG. 3 based on FIG. 1. For other components than the hard disk 126 included in the data processing apparatus 220 shown in FIG. 3 and functions of the components, refer to descriptions of related components in the data processing apparatus 120 in FIG. 1. Details are not described herein again. The following describes only the hard disk 126.

The hard disk 126 may also be referred to as a secondary storage. The hard disk 126 may be a non-volatile memory (non-volatile memory), for example, a read-only memory (read-only memory, ROM), a hard disk drive (hard disk drive, HDD), or a solid state disk (solid state disk, SSD). Different from a memory 122, a speed of reading and writing data by the hard disk 126 is slower than that of the memory 122, and the hard disk 126 is usually configured to store data persistently. In this application, a DPU 220 may be configured to provide a backup service for a host 110, and the hard disk 126 may be configured to store to-be-backed-up data sent by the host 110. A size of the hard disk 126 disposed in the DPU 220 may be determined based on an amount of data that needs to be backed up by the host 110 each time. For example, if the host 110 generates 1 TB data in a backup periodicity, the hard disk 126 may be at least 1 TB in size.

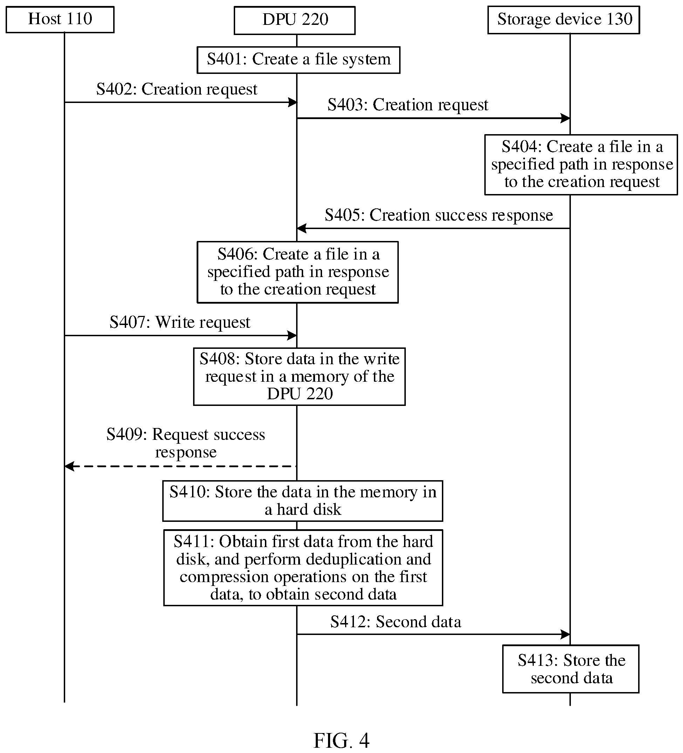

With reference to FIG. 4, the following describes another data backup method provided in an embodiment of this application by using a system shown in FIG. 3 as an example. The following still uses an example in which the data processing apparatus 220 is the DPU 220 for description. The method in the system may be implemented through two processes. A process 1 is that the DPU 220 creates a file system/file (step 401 to step 406). A process 2 is that the DPU 220 backs up a file of the host 110 to a storage device 130 (step 407 to step 413).

Step 401: The DPU 220 creates the file system.

In the method, the DPU 220 "formats" the hard disk 126, to establish a local file system, to manage local storage space (including the hard disk 126). The file system may be of any type (for example, ext3 or zfs). This is not limited in this embodiment of this application. It should be noted that the type of the local file system of the DPU 220 may be the same as or different from a type of a file system of a first host. Similarly, the type of the local file system of the DPU 220 may be the same as or different from a type of a file system of the storage device 130. This is not limited in this embodiment of this application. In addition, an occasion on which the DPU 220 creates the local file system is not limited in this embodiment of this application.

Step 402: The host 110 sends a creation request to the DPU 220, to request to create an object in the file system of the storage device 130. The object herein refers to a directory or a file in the file system.

In an implementation, the host 110 may mount the file system of the storage device 130 to a local directory of the host 110, and then the host 110 may perform an operation such as creating a file or a directory on the file system of the storage device 130 in a same manner of performing the operation on the local file system. File creation is used as an example. The host 110 may send a creation request requesting to create a file in the file system of the storage device 130, so that the storage device 130 creates the file in the local file system.

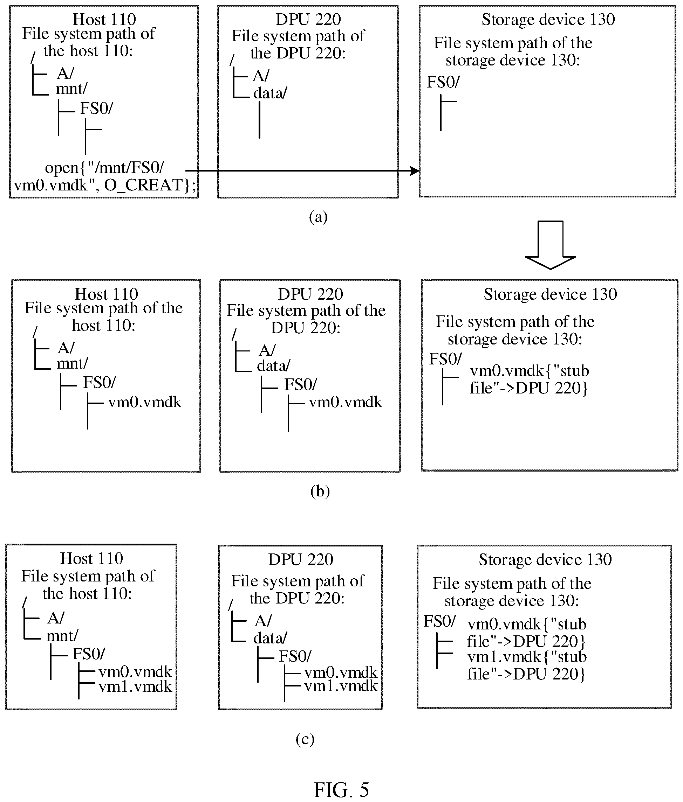

For example, as shown in (a) in FIG. 5, the host 110 mounts a file system whose root directory is /FS0/ in the storage device 130 to a /mnt/ directory of the host 110. For example, an application of the host 110 calls an open function to request to create an object (a directory or a file) in /mnt/FS0/. An open system call carries a specified path name, an object name, and an object type. For example, an open request is open{ "mnt/FS0/vm0.vmdk", O_CREAT}, which means that vm0.vmdk is to be created in an mnt/FS0/ path. It should be noted that: (1) The foregoing open function is merely an example, and a type and a generation manner of the creation request are not limited in this embodiment of this application. (2) There is no strict time sequence limitation between step 401 and step 402. Step 401 and step 402 may be performed simultaneously, or step 401 may be performed before step 402, or step 401 may be performed after step 402. This is not limited in this embodiment of this application.

Step 403: The DPU 220 sends the creation request to the storage device 130.

Step 404: The storage device 130 creates the object in a specified path in response to the creation request.

After receiving the creation request, the storage device 130 creates the file in the path corresponding to the file system. Further refer to (b) in FIG. 5. The storage device 130 creates vm0.vmdk in the FS0/ path of the local file system in response to the foregoing open request. If the creation succeeds, a creation success response is sent to the DPU 220. If the creation fails, for example, a file with a same name as this file already exists in the local file system of the storage device 130, the creation fails, and the storage device 130 returns a creation failure response to the DPU 220. The following uses the successful creation as an example.

It should be noted that, after the creation by the storage device 130 succeeds, the DPU 220 also creates a same file system or file, and after subsequently receiving a write request for the file sent by the host 110, the DPU 220 temporarily writes data of the file into a corresponding file in the local file system of the DPU 220. That is, no data is actually stored in the file of the storage device 130. Therefore, in an implementation, the storage device 130 generates file attribute information for the created file. The file attribute information indicates a file attribute, and the file attribute includes at least two types: a regular (regular) file and a stub (stub) file. The regular file means that data of the file is locally stored in the storage device 130. The stub file means that data of the file is not locally stored in a storage node, but is stored in a mapping address of the stub file. The mapping address indicates an actual storage location of the data of the file. For example, the mapping address includes a device identifier, and the device identifier uniquely indicates a device. Optionally, the mapping address may further include a file path and the like. This is not limited in this embodiment of this application, provided that a data source can be indicated. For example, as shown in (b) in FIG. 5, a mapping address of FS0/vm0.vmdk in the storage device 130 is the DPU 220, or a mapping address is DPU220: /FS0/vm0.vmdk. When the storage device 130 receives an access request for the stub file, the storage device 130 obtains the data of the file from the mapping address of the stub file. The following describes in detail a data access method in this scenario.

Step 405: The storage device 130 sends, to the DPU 220, a response indicating that the creation succeeds.

Step 406: The DPU 220 creates, based on the foregoing creation request, a same object in a specified path corresponding to the local file system of the DPU 220.

Still refer to (b) in FIG. 5. After the DPU 220 receives the creation success response sent by the storage device 130, the DPU 220 creates a same file system in a directory in the local file system in response to the foregoing open{"mnt/FS0/vm0.vmdk", O_CREAT} request. As shown in (b) in FIG. 5, the DPU 220 creates an FSO directory in a data/ directory, and creates vm0.vmdk in the FSO directory. In this way, a new file is created. One or more files or directories may be created in the foregoing manner. vm1.vmdk in (c) in FIG. 5 may also be created in the foregoing manner. For brevity, details are not described herein again.

Through the foregoing process, the DPU 220 creates the file system (for example, FS0:/) and the file that are the same as those of the host 110 and the storage device 130. Subsequently, the DPU 220 may store, in the corresponding file in the local file system, backup data of a file that is the same as the file in the DPU 220 and that is in the host 110.

Step 407: The host 110 sends a write request to the DPU 220 in response to a backup instruction, to back up data indicated by the backup instruction to the storage device 130.

Step 408: The DPU 220 stores the data in the write request in the memory 122.

Step 409: The DPU 220 sends a request success response to the host 110.

Step 407 to step 409 are respectively the same as step 201 to step 203, and details are not described herein again.

Step 410: The DPU 220 stores, in the hard disk 126, to-be-backed-up data in the memory 122.

Specifically, the DPU 220 writes the to-be-backed-up data into the corresponding file in the local file system, to perform persistent storage. A scenario shown in FIG. 5 is used as an example for description. It is assumed that in step 407, backup software of the host 110 triggers a fwrite system call to request to write data of vm0.vmdk into vm0.vmdk of the storage device 130. Correspondingly, in response to the fwrite system call, the DPU 220 first writes the data of vm0.vmdk into the local memory 122, subsequently obtains at least a part of the data of vm0.vmdk from the memory 122, and writes the data into vm0.vmdk in the local file system of the DPU 220, to complete persistent storage of vm0.vmdk.

In an optional implementation, the DPU 220 may first determine whether a vm0.vmdk file exists in the local file system. If the vm0.vmdk file exists, the DPU 220 writes the data of vm0.vmdk into vm0.vmdk of the local file system. If the file does not exist, the DPU 220 creates the file in the local file system by performing the foregoing steps. Alternatively, if the vm0.vmdk file does not exist in the local file system, or there is no remaining storage space in the hard disk 126, the DPU 220 may send the data of the vm0.vmdk file to the storage device 130.

There are a plurality of manners for the DPU 220 to trigger writing the data in the memory 122 into the hard disk 126. In an implementation, the DPU 220 may write the data in the memory 122 into the hard disk 126 when detecting that a preset triggering condition is met. For example, the preset triggering condition is that a data amount of the data in the memory 122 reaches a preset threshold or preset time is reached. For example, the DPU 220 periodically writes the data in the memory 122 into the hard disk 126.

In another implementation, the DPU 220 triggers, based on an indication of the host 110, writing the data in the memory 122 into the hard disk 126. For example, the host 110 sends indication information (for example, referred to as first indication information) to the DPU 220, where the first indication information indicates the DPU 220 to persistently store the data in the memory 122. For example, the backup software of the host 110 may trigger a fsync call based on a preset policy, and the fsync call indicates to write the data into a persistent storage medium. For example, the preset policy may be but is not limited to: (1) The fsync call is periodically triggered. (2) On a file basis, one fsync call is triggered for each file. (3) The DPU 220 triggers the fsync call after the preset time of sending the write request. This is not limited in this embodiment of this application. Correspondingly, after receiving the fsync call, the DPU 220 writes the data in the memory 122 into the hard disk 126. After writing the data in the memory 122 into the hard disk 126, the DPU 220 returns a fsync call success response to the host. Specifically, the DPU 220 may write all current data in the memory 122 into the hard disk 126, or may write data belonging to a specified file into the hard disk 126. For example, the backup software may send, to the DPU 220, a fysch call that carries a file handle corresponding to vm0.vmdk, to indicate the DPU to write all data of vm0.vmdk in the memory 122 into the hard disk 126. For a manner in which the DPU 220 obtains data of another file (for example, vm1.vmdk) and writes the data of vm1.vmdk into the local file system, refer to the foregoing descriptions. Details are not described herein again.

Step 411: The DPU 220 obtains the to-be-backed-up data (for example, denoted as first data) from the hard disk 126, and performs deduplication and compression operations on the first data, to obtain data obtained through deduplication and compression (for example, denoted as second data).

For example, when the DPU 220 writes the data into the corresponding file in the local file system, a background sequentially reads the data in the local file system from a file header for aggregation, and deduplicates and compresses a segment of aggregated data, such as the first data, to obtain the second data. For a specific manner in which the DPU 220 performs the deduplication and compression operations on the first data, refer to the foregoing descriptions. Details are not described herein again.

Step 412: The DPU 220 sends the second data to the storage device 130.

Step 413: The storage device 130 writes the data into the corresponding file in the local file system of the storage device 130.

It should be noted that the data sent by the DPU 220 to the storage device 130 each time may be a part of data of a file. To be specific, the DPU 220 and the storage device 130 may repeatedly perform step 411 to step 413 for a plurality of times to complete data migration of a complete file. In this process, in an optional implementation, the DPU 220 may further record an offset location (for example, an offset) of migrated data in the file, that is, record an offset location of data to be read next time, and use the offset location as a cursor for a migration task. For example, a data size of the vm0.vmdk file is 100 M, and the DPU reads data from 0 M to 60 M of the file from the hard disk 126 for the first time, and records an offset location, namely, 60 M, so that data may be read from a location of 60 M of the file next time. Correspondingly, the DPU 220 may notify the storage device 130 of the offset location of the migrated data in the file.

After migrating all the data of the file to the storage device 130, the DPU 220 may send, to the storage device 130, indication information (for example, referred to as second indication information) indicating that all the data of the file is migrated. After receiving the second indication information, the storage device 130 may modify a file attribute of the file to "regular", that is, a regular file, indicating that the data of the file no longer points to local data of the DPU 220. For example, the indication information and the data of the file may be in a same data packet. For example, a data packet includes a header and a payload, and the header includes but is not limited to one or both of the following: the offset location of the migrated data and the second indication information. The second indication information may include one bit, and different values of the bit indicate whether the data of the file is completely sent to the storage device 130. For example, when a value is 0, it indicates that the data of the file is completely sent; and when a value is 1, it indicates that the data of the file is not completely sent.

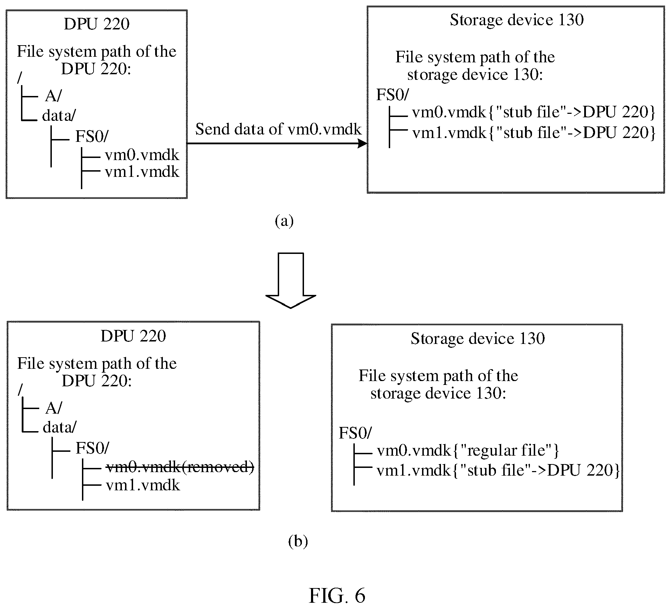

Optionally, after execution of the storage device 130 succeeds, the storage device 130 sends an execution success response to the DPU 220. After receiving the response, the DPU 220 may locally delete the data of the file from the DPU 220. As shown in (a) in FIG. 6, the DPU 220 sends data of vm0.vmdk to the storage device 130, and the storage device 130 writes the data of vm0.vmdk into vm0.vmdk. After writing is completed, as shown in (b) in FIG. 6, the storage device 130 modifies a file attribute of vm0.vmdk to a regular file, and sends an execution success response to the DPU 220. Then, the DPU 220 may delete vm0.vmdk from the local file system.

In the foregoing manner, the DPU 220 may first temporarily write the to-be-backed-up file data into the local file system, that is, write the file data into the hard disk 126. Because the file data has been stored persistently, logical data backup is completed. In this way, the data backup can be completed in the DPU 220. A backup process depends only on a computing capability of the DPU 220 and read/write bandwidth and a size of the disk, and is no longer limited by performance of bandwidth from the host to the storage device 130 and a processing capability of the storage device 130. In a big data backup scenario, backup performance can be significantly improved, and a backup window can be shortened. In addition, operations such as data deduplication do not need to be performed on the file data, and the file data does not need to be sent to the storage device 130 for storage. Therefore, network communication overheads are not needed, and the backup window can be significantly shortened, to improve backup efficiency.

Based on the data processing method shown in FIG. 4, an embodiment of this application may further provide a data access method.

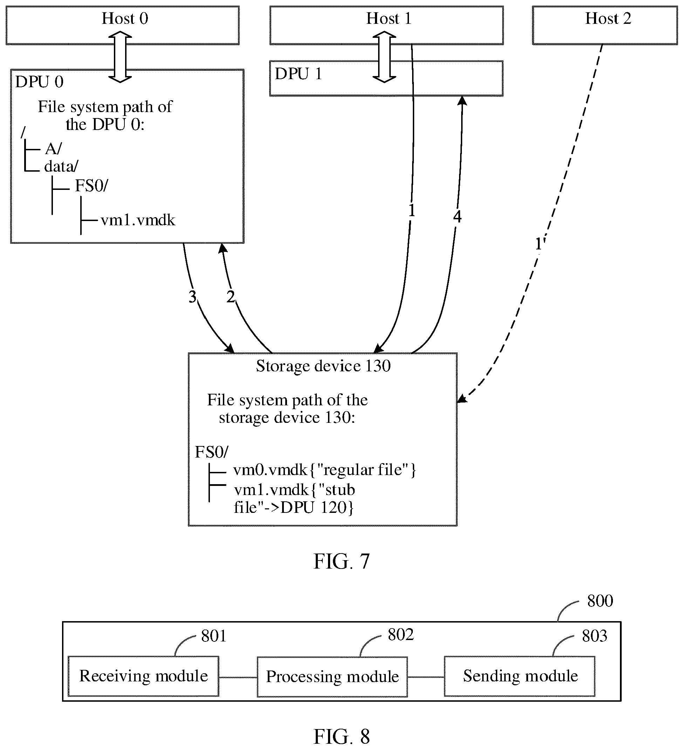

FIG. 7 shows a system according to this embodiment of this application. As shown in FIG. 7, the system includes a host 0, a host 1, a DPU 0, a DPU 1, a host 2, and a storage device 130. The host 0, the DPU 0, and the storage device 130 are respectively the host 110, the DPU 220, and the storage device 130 in FIG. 3. In addition, the host 1 is connected to the DPU 1.

FIG. 7 is a schematic flowchart corresponding to the data access method applied to the system. A procedure includes the following steps.
(1) The storage device 130 receives a data access request (for example, referred to as a first access request) sent by the host 1 through the DPU 1.

It is assumed that the data access request requests to access data of FS0/vm1.vmdk. As shown in FIG. 7, a file attribute of a vm1.vmdk file in a file system of the storage device 130 is a stub file, and a mapping address is the DPU 0.

For example, based on the first access request, a part of the data of vm1.vmdk may be accessed. The storage device 130 may determine, based on a recorded offset location of migrated data of vm1.vmdk, whether the part of the data is locally stored in the storage device 130. If the part of the data is locally stored, the storage device 130 may directly send the part of the data to the DPU 1. Otherwise, the storage device 130 obtains the data from the DPU 0.

(2) The storage device 130 sends a data access request (for example, referred to as a second access request) to the DPU 0. Correspondingly, the DPU 0 receives the second data access request.

The second access request requests to access data of FS0/vm1.vmdk.

It should be noted that the first access request and the second access request may be the same or may be different. This is not limited in this embodiment of this application. For example, when the DPU 0 can identify the first access request, the storage device 130 may directly forward the first access request to the DPU 0. In this case, the second access request is the first access request. On the contrary, when the DPU 0 cannot identify the first access request, the storage device 130 generates, based on the first access request, the second access request that can be identified by the DPU 0. In this case, the second access request is different from the first access request.

(3) In response to the second access request, the DPU 0 obtains the data of vm1.vmdk from a local file system of the DPU 0, and sends the data to the storage device 130. Correspondingly, the storage device 130 receives the data sent by the DPU 0.

In an optional implementation, when the storage device 130 receives the data of vm1.vmdk sent by the DPU 0, the storage device 130 may write the data of vm1.vmdk into vm1.vmdk of a local file system of a storage node.

(4) The storage node sends the data of vm1.vmdk to the host 1.

This application is not limited to communication between the storage node and the DPU. For example, the storage device 130 may alternatively receive a data access request sent by the host 2, obtain, in the foregoing manner, data that the host 2 requests to access, and return the data to the host 2. Details are not described herein again.

In the foregoing manner, data access flexibility may be provided in a data backup process.

Based on a same inventive concept as the method embodiments, an embodiment of this application further provides a data processing apparatus. The data processing apparatus is configured to perform the methods performed by the DPU in the foregoing method embodiments. As shown in FIG. 8, a data processing apparatus 800 includes a receiving module 801, a processing module 802, and a sending module 803. Specifically, in the data processing apparatus 800, a connection is established between the modules by using a communication path.

The receiving module 801 is configured to receive a write request sent by a first host, where the write request carries first data that needs to be backed up to a storage device 130. For a specific implementation, refer to descriptions of step 201 in FIG. 2, or refer to descriptions of step 407 in FIG. 4. Details are not described herein again.

The processing module 802 is configured to perform deduplication and compression operations on the first data, to obtain second data. For a specific implementation, refer to descriptions of step 204 in FIG. 2, or refer to descriptions of step 411 in FIG. 4. Details are not described herein again.

The sending module 803 is configured to send the second data to the storage device 130. For a specific implementation, refer to descriptions of step 205 in FIG. 2, or refer to descriptions of step 412 in FIG. 4. Details are not described herein again.

In a possible implementation, the data processing apparatus 800 is a network interface card or a DPU.

In a possible implementation, after the receiving module 801 receives the write request, the processing module 802 is further configured to store the first data in a memory 122 of the data processing apparatus. For a specific implementation, refer to descriptions of step 202 in FIG. 2, or refer to descriptions of step 408 in FIG. 4. Details are not described herein again.

The sending module is further configured to return a write request completion response to the first host. For a specific implementation, refer to descriptions of step 203 in FIG. 2, or refer to descriptions of step 409 in FIG. 4. Details are not described herein again.

In a possible implementation, after the receiving module 801 receives the write request, the processing module 802 is further configured to store the first data in a memory 122 of the data processing apparatus. For a specific implementation, refer to descriptions of step 408 in FIG. 4. Details are not described herein again. The processing module 802 is further configured to obtain the first data from the memory 122 and store the first data in a persistent storage medium of the data processing apparatus. For a specific implementation, refer to descriptions of step 410 in FIG. 4. Details are not described herein again.

In a possible implementation, the data processing apparatus 800 further includes a first file system, and the first file system is the same as a second file system of the storage device 130. The receiving module 801 is further configured to receive a file creation request, where the file creation request requests to create a first file in the file system of the storage device 130. For a specific implementation, refer to descriptions of step 402 in FIG. 4. Details are not described herein again.

The sending module 803 is further configured to send the file creation request to the storage apparatus. For a specific implementation, refer to descriptions of step 403 in FIG. 4. Details are not described herein again.

The receiving module 801 is further configured to receive a creation success response sent by the storage device 130. For a specific implementation, refer to descriptions of step 405 in FIG. 4. Details are not described herein again.

The processing module 802 is further configured to create the first file in the first file system. For a specific implementation, refer to descriptions of step 406 in FIG. 4. Details are not described herein again.

The write request sent by the first host requests to store the first data in the first file of the second file system.

When storing the first data in the persistent storage medium of the data processing apparatus, the processing module 802 is specifically configured to write the first data into the first file of the first file system. For a specific implementation, refer to descriptions of step 411 in FIG. 4. Details are not described herein again.

In a possible implementation, the processing module 802 is further configured to: after performing the deduplication and compression operations on the data of the first file and storing the data in the storage apparatus, delete the first file stored in the apparatus.

In a possible implementation, the receiving module 801 is further configured to receive a read request that is sent by the storage device 130 and that requests to read at least a part of the data of the first file. For a specific implementation, refer to descriptions of step 2 in FIG. 7. Details are not described herein again. The sending module is further configured to send the at least a part of the data of the first file to the storage device 130. For a specific implementation, refer to descriptions of step 3 in FIG. 7. Details are not described herein again.

An embodiment of this application further provides a computer storage medium. The computer storage medium stores computer instructions. When the computer instructions are run on a storage apparatus, the storage apparatus is enabled to perform the foregoing related method steps, to implement the method performed by the DPU 120 in the foregoing embodiments. Refer to descriptions of step 201 to step 205 in FIG. 2. Details are not described herein again. Alternatively, the storage apparatus is enabled to perform the foregoing related method steps, to implement the method performed by the DPU 220 in the foregoing embodiments. Refer to descriptions of step 401 to step 403 and step 405 to step 412 in FIG. 4. Details are not described herein again.

An embodiment of this application further provides a computer program product. When the computer program product runs on a computer, the computer is enabled to perform the foregoing related steps, to implement the method performed by the DPU 120 in the foregoing embodiments. Refer to descriptions of step 201 to step 205 in FIG. 2. Details are not described herein again. Alternatively, the computer is enabled to perform the foregoing related method steps, to implement the method performed by the DPU 220 in the foregoing embodiments. Refer to descriptions of step 401 to step 403 and step 405 to step 412 in FIG. 4. Details are not described herein again.

In addition, an embodiment of this application further provides an apparatus. The apparatus may be specifically a chip, a component, or a module. The apparatus may include a processor and a storage that are connected. The storage is configured to store computer-executable instructions. When the apparatus runs, the processor may execute the computer-executable instructions stored in the storage, so that the chip performs the method performed by the DPU 120 in the foregoing method embodiments. Refer to descriptions of step 201 to step 205 in FIG. 2. Details are not described herein again. Alternatively, the chip performs the foregoing related method steps to implement the method performed by the DPU 220 in the foregoing embodiments. Refer to descriptions of step 401 to step 403 and step 405 to step 412 in FIG. 4. Details are not described herein again.

The data processing apparatus, the computer storage medium, the computer program product, or the chip provided in embodiments of this application is configured to perform the method corresponding to the DPU 120, the DPU 220, or the storage device 130 provided above. Therefore, for beneficial effects that can be achieved by the data processing apparatus, the computer storage medium, the computer program product, or the chip, refer to the beneficial effects of the corresponding method provided above. Details are not described herein again.

Based on descriptions about the foregoing implementations, a person skilled in the art may understand that, for the purpose of convenient and brief description, division into the foregoing functional modules is used as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units (or modules) in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

Optionally, the computer-executable instructions in embodiments of this application may also be referred to as application program code. This is not specifically limited in embodiments of this application.

All or some of the foregoing embodiments may be implemented by using software, hardware, firmware, or any combination thereof. When the software is used to implement embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Optionally, the storage medium may alternatively be integrated into a processor. The processor and the storage medium may be disposed in the ASIC.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that, a person skilled in the art can make various modifications and variations to this application without departing from the scope of this application. In this way, this application is intended to cover these modifications and variations of this application provided that they fall within the scope of protection of the claims of this application and their equivalent technologies.

## Claims

1. A data backup system, comprising a data processing apparatus and a storage device, wherein
the data processing apparatus is configured to receive a write request sent by a first host, wherein the write request carries first data that needs to be backed up to the storage device;
the data processing apparatus is configured to perform deduplication and compression operations on the first data, to obtain second data; and
the data processing apparatus is configured to write the second data into the storage device.

2. The system according to claim 1, wherein the data processing apparatus is a network interface card or a data processing unit DPU.

3. The system according to claim 1 or 2, wherein after receiving the write request, the data processing apparatus is further configured to: after storing the first data in a memory of the data processing apparatus, return a write request completion response to the first host; and
when performing the deduplication operation on the first data, the data processing apparatus is specifically configured to:
obtain the first data from the memory, and delete, from the first data, a data block duplicated with a data block that has been stored in the storage device.

4. The system according to claim 1 or 2, wherein after receiving the write request, the data processing apparatus is further configured to: after storing the first data in a memory of the data processing apparatus, return a write request completion response to the first host; and
obtain the first data from the memory, and store the first data in a persistent storage medium of the data processing apparatus; and
the data processing apparatus further comprises the persistent storage medium, and when performing the deduplication and compression operations on the first data, the data processing apparatus is specifically configured to:
obtain the first data from the persistent storage medium; and delete, from the first data, a data block duplicated with a data block that has been stored in the storage device, to generate the second data.

5. The system according to claim 4, wherein the data processing apparatus further comprises a first file system, the first file system is the same as a second file system of the storage device, and the write request is a write request based on the second file system; and
when storing the first data in the persistent storage medium of the data processing apparatus, the data processing apparatus is specifically configured to store the first data in the persistent storage medium of the data processing apparatus by using the first file system.

6. The system according to claim 4 or 5, wherein the data processing apparatus is further configured to: receive a file creation request, and forward the file create request to the storage apparatus;
the storage device is further configured to: create, in the second file system of the storage device, a first file that the file creation request requests to create; generate mapping address information of the first file, wherein the mapping address information indicates that data of the first file is located in the data processing apparatus, or indicates an access path of the data of the first file in the data processing apparatus; and send a creation success response to the data processing apparatus;
the data processing apparatus is further configured to: receive the creation success response sent by the storage device, and create the first file in the first file system;
the write request requests to store the first data in the first file of the second file system; and
when storing the first data in the persistent storage medium of the data processing apparatus, the data processing apparatus is specifically configured to write the first data into the first file.

7. The system according to claim 6, wherein the data processing apparatus is further configured to:
after performing the deduplication and compression operations on the data of the first file and storing the data in the storage apparatus, delete the first file stored in the data processing apparatus; and
the storage apparatus is configured to modify the mapping address information of the first file to indicate that the data of the first file is stored in the storage apparatus.

8. The system according to claim 6, wherein
the storage device is further configured to: receive a first read request sent by a second host, wherein the first read request is used to read at least a part of the data of the first file; and when determining that the at least a part of the data of the first file is located in the data processing apparatus, send a second read request used to read the at least a part of the data of the first file to the data processing apparatus; and
the data processing apparatus is further configured to: read the at least a part of the data of the first file from the data processing apparatus based on the second read request, and send the data to the storage device.

9. A data processing apparatus, wherein the apparatus comprises:
a receiving module, configured to receive a write request sent by a first host, wherein the write request carries first data that needs to be backed up to a storage device;
a processing module, configured to perform deduplication and compression operations on the first data, to obtain second data; and
a sending module, configured to send the second data to the storage device.

10. The apparatus according to claim 9, wherein the apparatus is a network interface card or a data processing unit DPU.

11. The apparatus according to claim 9 or 10, wherein after the receiving module receives the write request, the processing module is further configured to store the first data in a memory of the data processing apparatus; and
the sending module is further configured to return a write request completion response to the first host; and
when performing the deduplication operation on the first data, the processing module is specifically configured to:
obtain the first data from the memory, and delete, from the first data, a data block duplicated with a data block that has been stored in the storage device.

12. The apparatus according to claim 9 or 10, wherein after the receiving module receives the write request, the processing module is further configured to store the first data in a memory of the data processing apparatus; and the sending module is further configured to return a write request completion response to the first host;
the processing module is further configured to: obtain the first data from the memory, and store the first data in a persistent storage medium of the data processing apparatus; and
when performing the deduplication and compression operations on the first data, the processing module is specifically configured to:
obtain the first data from the persistent storage medium, and delete, from the first data, a data block duplicated with a data block that has been stored in the storage device.

13. The apparatus according to claim 12, wherein the apparatus further comprises a first file system, the first file system is the same as a second file system of the storage device, and the write request is a write request based on the second file system; and
when storing the first data in the persistent storage medium of the data processing apparatus, the processing module is specifically configured to store the first data in the persistent storage medium of the data processing apparatus by using the first file system.

14. The apparatus according to claim 12 or 13, wherein the receiving module is further configured to receive a file creation request;
the sending module is further configured to send the file creation request to the storage apparatus;
the receiving module is further configured to receive a creation success response sent by the storage device;
the processing module is further configured to create a first file in the first file system;
the write request requests to store the first data in the first file of the second file system; and
when storing the first data in the persistent storage medium of the data processing apparatus, the processing module is specifically configured to write the first data into the first file of the first file system.

15. The apparatus according to claim 14, wherein the processing module is further configured to: after performing the deduplication and compression operations on the data of the first file and storing the data in the storage apparatus, delete the first file stored in the apparatus.

16. The apparatus according to claim 14, wherein
the receiving module is further configured to receive a read request sent by the storage device, wherein the read request requests to read at least a part of data of the first file; and
the sending module is further configured to send the at least a part of the data of the first file to the storage device.

17. A computing apparatus, wherein the computing device comprises a processor and a storage;
the storage is configured to store computer program instructions; and
the processor invokes the computer program instructions in the storage, to perform a function of the data processing apparatus according to any one of claims 9 to 16.

18. A computer-readable storage medium, comprising a computer-readable storage medium storing program code, wherein instructions comprised in the program code are used to perform a function of the data processing apparatus according to any one of claims 9 to 16.
